# EUROPÄISCHE PATENTSCHRIFT

(11) **EP 2 573 444 B1**
(45) Veröffentlichungstag und Bekanntmachung des Hinweises auf die Patenterteilung: **20.05.2015**
(21) Anmeldenummer: 12179952.2
(22) Anmeldetag: 09.08.2012
(51) Int. Cl.: F16N 11/08

(54) **Sammelbehälter für Schmierstoffe**
Collection container for lubricants
Réservoir pour lubrifiant

(30) Priorität: 20.09.2011 DE 202011051373 U
(43) Veröffentlichungstag der Anmeldung: 27.03.2013
(73) Patentinhaber: Perma-Tec GmbH & Co. KG, 97717 Euerdorf (DE)
(72) Erfinder: Hildenbrand, Thomas, 97769 Bad Brückenau (DE); Eisenbacher, Egon, 97753 Karlstadt (DE)
(74) Vertreter: Albrecht, Rainer Harald

(56) Entgegenhaltungen:
- EP-A1- 0 644 369
- DE-A1-102005 004 456

## Beschreibung

Die Erfindung betrifft einen Sammelbehälter für Schmierstoffe mit einem Gehäuse, welches eine Einlassöffnung zum Einbringen von Schmierstoff und einen in dem Gehäuse bewegbar angeordneten Kolben aufweist, wobei das Gehäuse und der bewegbare Kolben einen Schmierstoffsammelraum begrenzen.

In Schmiersystemen, in denen beispielsweise Lager mit Schmierstoff versorgt werden, wird verunreinigter und überschüssiger Schmierstoff häufig in Sammelbehältern, die mit dem Auslass eines Lagers verbunden werden, aufgefangen und gesammelt. Ein Sammelbehälter für Schmierstoffe mit der vorgenannten Zweckbestimmung und den eingangs beschriebenen Merkmalen ist aus DE 20 2010 014 823 U1 bekannt. Bei dem bekannten Sammelbehälter wird ein Kolben durch den Druck des einströmenden Schmierstoffs von der Einlassöffnung weg verschoben, wobei ein am oberen Ende des Schmierstoffsammelbehälters angebrachter Anschlag die Bewegung begrenzt.
Ist der Sammelbehälter mit Schmierstoff gefüllt und Schmierstoff läuft weiterhin nach, kann der Schmierstoff an dem Kolben vorbei aus dem Sammelbehälter austreten. Dies ist insbesondere dann ein Problem, wenn ein Kolben besonders leichtgängig, also mit geringster Druckdifferenz und so mit geringer Dichtverpressung ausgeführt werden muss und der Altschmierstoff durch Temperatur- und Druckbelastung zum Ausbluten, also Absondern von Ölanteilen neigt. Bei einer weiteren Ausführungsform des beschriebenen Sammelbehälters wird anstelle des Kolbens eine in dem Sammelbehälter fixierte elastische Membran verwendet. Zum Schutz der Membran ist auf dem Sammelbehälter ein Deckel mit einer Entlüftungsöffnung angeordnet. Nachteilig ist, dass der Sammelbehälter nach seiner Befüllung nicht oder nur mit Mühe wieder entleert werden kann.

Vor diesem Hintergrund liegt der Erfindung die Aufgabe zugrunde einen verbesserten Sammelbehälter für Schmierstoffe anzugeben, der wirksam abgedichtet ist und nach seiner Befüllung eine problemlose Entleerung ermöglicht.

Ausgehend von einem Sammelbehälter für Schmierstoffe mit den eingangs beschriebenen Merkmalen wird die Aufgabe erfindungsgemäß dadurch gelöst, dass auf dem Gehäuse ein Deckel mit einer Entlüftungsöffnung angeordnet ist und dass zwischen der Unterseite des Deckels und der dem Deckel zugewandten Rückseite des Kolbens eine Dichtungsanordnung vorgesehen ist, welche nach vollständiger Füllung des Schmierstoffsammelraumes einen zwischen dem Deckel und dem Kolben gebildeten Spalt abdichtet.

Die Dichtungsanordnung umfasst erfindungsgemäß eine Dichtfläche sowie eine Elastomerdichtung, wobei die Dichtfläche an der Rückseite des Kolbens oder an der Unterseite des Deckels angeformt ist und nach vollständiger Füllung des Schmierstoffsammelraumes an der Elastomerdichtung anliegt. Auf diese Weise ist der Schmierstoffsammelraum im gefüllten Zustand wirkungsvoll abgedichtet. Die Abdichtung des Kolbens innerhalb des Gehäuses ist unkritisch, so dass der Kolben leichtgängig und mit geringer umfangsseitiger Dichtverpressung beweglich im Gehäuse angeordnet werden kann.

Gemäß einer besonders bevorzugten Ausgestaltung des erfindungsgemäßen Sammelbehälters ist vorgesehen, dass der Deckel eine der Einlassöffnung zugewandte ringförmige Dichtungsnut aufweist und dass an der Rückseite des Kolbens ein ringförmiger Vorsprung angeformt ist, der nach vollständiger Füllung des Sammelraums in die Dichtungsnut eingreift und an dieser abgestützt ist. In der Dichtungsnut ist zweckmäßig ein elastomerer Dichtungsring angeordnet.

Durch die erfindungsgemäße Anordnung der Entlüftungsöffnung in dem Deckel ist sichergestellt, dass die in dem Sammelraum enthaltene Luft, bei der Bewegung des Kolbens aus dem Sammelraum entweichen kann. Zudem ist vorgesehen, dass der Kolben sehr leichtgängig, bevorzugt mit weniger als 0,2 bar, in dem Sammelraum bewegbar ist. Selbst bei ansteigendem Druck des Schmierstoffes in dem Sammelbehälter, nach Anschlagen des Kolbens an dem Deckel, ist eine wirkungsvolle Abdichtung gewährleistet, da der Deckel, gegen den der Kolben drückt, mit dem Gehäuse fest verbunden ist. Die Verbindung zwischen Gehäuse und Deckel kann unlösbar oder lösbar ausgebildet sein. Vorzugsweise ist der Deckel durch ein Gewinde mit dem Gehäuse verbunden. Denkbar ist auch, dass der Deckel und das Gehäuse verklebt oder mittels Reibschweißen dauerhaft miteinander verbunden werden.

Ein weiterer Gesichtspunkt der Erfindung ist, dass der Kolben an der der Entlüftungsöffnung zugewandten Seite eine Werkzeugaufnahme aufweist. Zur Entleerung des Sammelbehälters ist es möglich, ein geeignetes Werkzeug durch die Entlüftungsöffnung einzuführen und an der Werkzeugaufnahme anzusetzen. Der Kolben ist dann mittels des Werkzeuges niederdrückbar.

Die Erfindung wird im Folgenden anhand einer lediglich ein Ausführungsbeispiel darstellenden Zeichnung erläutert. Es zeigen schematisch:
Fig. 1 einen erfindungsgemäßen Sammelbehälter im leeren Zustand,
Fig. 2 einen erfindungsgemäßen Sammelbehälter im gefüllten Zustand.

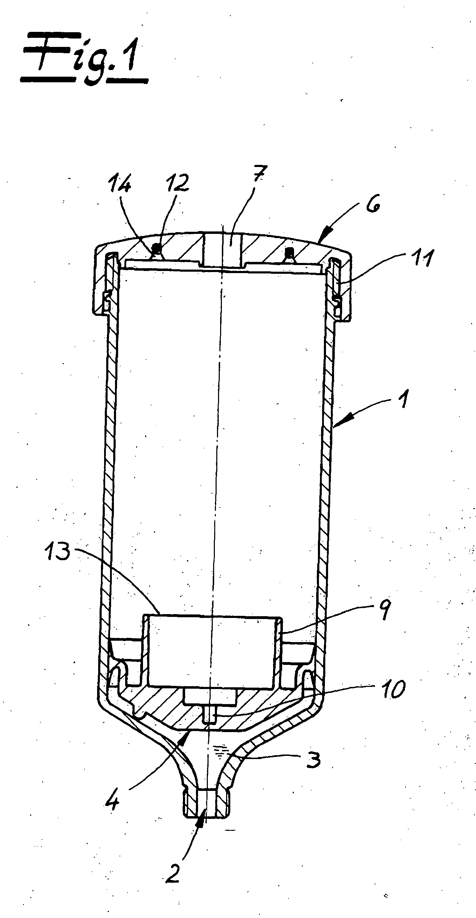

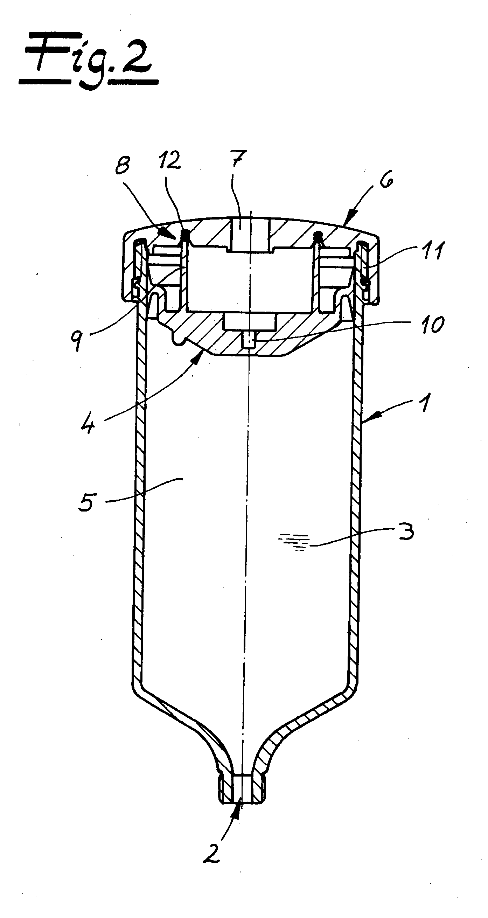

Der in den Figuren 1 und 2 dargestellte Sammelbehälter für Schmierstoffe weist ein Gehäuse 1 auf, welches eine Einlassöffnung 2 zum Einbringen von Schmierstoff 3 und einen in dem Gehäuse 1 bewegbar angeordneten Kolben 4 aufweist. Den oberen Abschluss des Gehäuses 1 bildet ein Deckel 6, der eine zentral angeordnete Entlüftungsöffnung 7 aufweist. Das Gehäuse 1 ist im Wesentlichen zylindrisch ausgebildet und weist einen verjüngten Hals auf, in dem die Einlassöffnung 2 zur Aufnahme des Schmierstoffes 3 angeordnet ist.

Wie aus den Figuren 1 und 2 ersichtlich ist, weist der Kolben 4 einen abdichtend an der Innenwand des Gehäuses 1 geführten Bereich auf. Der Kolben fungiert somit in bekannter Weise als Dichtelement für einen in das Gehäuse 1 eingebrachten Schmierstoff 3. Der Kolben ist sehr leichtgängig geführt und mit einer Druckdifferenz von weniger als 0,2 bar in den Sammelraum bewegbar.

Die Einlassöffnung 2 kann zur Verbindung mit einem Schmierstoffauslass eines nicht näher dargestellten Schmiersystems ein Gewinde aufweisen.

Zwischen der Unterseite des Deckels 6 und der dem Deckel zugewandten Rückseite des Kolbens 4 ist eine Dichtungsanordnung 8 vorgesehen, welche gemäß der Darstellung in Fig. 2 nach vollständiger Füllung des Schmierstoffsammelraumes 5 einen zwischen dem Deckel 6 und dem Kolben 4 gebildeten Spalt abdichtet. Die Dichtungsanordnung 8 umfasst eine Dichtfläche 13 sowie eine Elastomerdichtung 12, wobei die Dichtfläche im Ausführungsbeispiel an der Rückseite des Kolbens 4 angeformt ist und nach vollständiger Füllung des Schmierstoffsammelraumes an der Elastomerdichtung 12 anliegt. Im konkreten Ausführungsbeispiel ist an der Rückseite des Kolbens 4 ein ringförmiger Vorsprung 9 angeformt, der in der in Fig. 2 dargestellten Funktionsstellung in eine ringförmige Dichtungsnut 14 an der Unterseite des Deckels 6 eingreift und an dieser abgestützt ist. Die Elastomerdichtung 12 besteht aus einem Elastomerring und ist in der Dichtungsnut 14 angeordnet.

Aus den Fig. 1 und 2 ist erkennbar, dass der Kolben 4 an der der Entlüftungsöffnung 7 zugewandten Seite eine Werkzeugaufnahme 10 aufweist. Zur Entleerung des Sammelbehälters ist ein Werkzeug durch die zentral in dem Deckel 6 angeordnete Entlüftungsöffnung 7 in das Gehäuse 1 einführbar und an der Werkzeugaufnahme 10 ansetzbar. Der Kolben 4 kann dann mittels des Werkzeuges niedergedrückt werden, um den Schmierstoffsammelraum 5 wieder zu entleeren.

Im Ausführungsbeispiel sind der Deckel 6 und das Gehäuse mittels eines Gewindes 11 lösbar miteinander verbunden. Alternativ können der Deckel und das Gehäuse miteinander verklebt oder z. B. durch Reibschweißen unlösbar miteinander verbunden werden.

## Patentansprüche

1. Sammelbehälter für Schmierstoffe mit einem Gehäuse (1), welches eine Einlassöffnung (2) zum Einbringen von Schmierstoff (3) und einen in dem Gehäuse (1) bewegbar angeordneten Kolben (4) aufweist, wobei das Gehäuse (1) und der bewegbare Kolben (4) einen Schmierstoffsammelraum (5) begrenzen, **dadurch gekennzeichnet, dass** auf dem Gehäuse (1) ein Deckel (6) mit einer Entlüftungsöffnung (7) angeordnet ist, dass zwischen der Unterseite des Deckels (6) und der dem Deckel zugewandten Rückseite des Kolbens (4) eine Dichtungsanordnung (8) vorgesehen ist, welche nach vollständiger Füllung des Schmierstoffsammelraumes (5) einen zwischen dem Deckel (6) und dem Kolben (4) gebildeten Spalt abdichtet und dass die Dichtungsanordnung (8) eine Dichtfläche (13) sowie eine Elastomerdichtung (12) umfasst, wobei die Dichtfläche (13) an der Rückseite des Kolbens (4) oder der Unterseite des Deckels (6) angeformt ist und nach vollständiger Füllung des Schmierstoffsammelraumes (5) an der Elastomerdichtung (12) anliegt.

2. Sammelbehälter nach Anspruch 1, **dadurch gekennzeichnet, dass** der Deckel (6) eine der Einlassöffnung (2) zugewandte geringförmige Dichtungsnut (14) aufweist und dass an der Rückseite des Kolbens (4) ein ringförmiger Vorsprung (9) angeformt ist, der nach vollständiger Füllung des Schmierstoffsammelraumes (5) in die Dichtungsnut (14) eingreift und an dieser abgestützt ist.

3. Sammelbehälter nach Anspruch 2, **dadurch gekennzeichnet, dass** in der Dichtungsnut (14) ein elastomerer Dichtungsring angeordnet ist.

4. Sammelbehälter nach einem der Ansprüche 1 bis 3, **dadurch gekennzeichnet, dass** der Kolben (4) an der der Entlüftungsöffnung (7) zugewandten Seite eine Werkzeugaufnahme (10) aufweist, wobei zur Entleerung des Sammelbehälters ein Werkzeug durch die Entlüftungsöffnung (7) einführbar und an der Werkzeugaufnahme (10) ansetzbar ist.

5. Sammelbehälter nach einem der Ansprüche 1 bis 4, **dadurch gekennzeichnet, dass** der Deckel (6) und das Gehäuse (1) mittels eines Gewindes (11) lösbar miteinander verbunden sind.

6. Sammelbehälter nach einem der Ansprüche 1 bis 4, **dadurch gekennzeichnet, dass** der Deckel (6) und das Gehäuse (1) unlösbar miteinander verbunden sind.

## Claims

1. A collecting container for lubricants comprising a housing (1) which has an inlet opening (2) for receiving lubricant (3) and a piston (4) that is arranged movably in the housing (1), wherein the housing (1) and the movable piston (4) define a lubricant collecting chamber (5), **characterized in that** a cover (6) having a venting opening (7) is arranged on the housing (1), that a sealing arrangement (8) is provided between the lower side of the cover (6) and the piston's (4) rear side facing towards the cover, the sealing arrangement sealing off a gap formed between the cover (6) and the piston (4) after the lubricant collecting chamber (5) is completely filled, and that the sealing arrangement (8) comprises a sealing surface (13) and an elastomer seal (12), wherein the sealing surface (13) is formed on the rear side of the piston (4) or on the lower side of the cover (6) and rests against the elastomer seal (12) after the lubricant collecting chamber (5) is completely filled.

2. The collecting chamber according to claim 1, **characterized in that** the cover (6) has an annular sealing groove (14) that faces towards the inlet opening (2), and that an annular projection (9) is formed on the rear side of the piston (4), the annular projection engaging in and being supported on the sealing groove (14) after the lubricant collecting chamber (5) is completely filled.

3. The collecting chamber according to claim 2, **characterized in that** an elastomer sealing ring is arranged in the sealing groove (14).

4. The collecting chamber according to any one of claims 1 to 3, **characterized in that** the piston (4) has a tool receptacle (10) on the side facing towards the venting opening (7), wherein for draining the collecting chamber, a tool can be inserted through the venting opening (7) and can engage with the tool receptacle (10).

5. The collecting chamber according to any one of claims 1 to 4, **characterized in that** the cover (6) and the housing (1) are detachably connected to one another by means of a thread (11).

6. The collecting chamber according to any one of claims 1 to 4, **characterized in that** the cover (6) and the housing (1) are connected to one another in a non-detachable manner.

## Revendications

1. Récipient collecteur pour lubrifiants comprenant un logement (1) qui présente une ouverture d'admission (2) pour introduire du lubrifiant (3) et un piston (4) disposé mobile dans le logement (1), sachant que le logement (1) et le piston mobile (4) délimitent un espace collecteur de lubrifiant (5), **caractérisé en ce qu'**un couvercle (6) avec une ouverture d'aération (7) est disposé sur le logement (1), qu'entre la sous-face du couvercle (6) et le dos du piston (4) tourné vers le couvercle est prévu un agencement de joint (8), qui étanchéifie une fente formée entre le couvercle (6) et le piston (4) une fois l'espace collecteur de lubrifiant (5) complètement rempli, et que l'agencement de joint (8) comprend une surface d'étanchéité (13) ainsi qu'un joint élastomère (12), sachant que la surface d'étanchéité (13) est formée au dos du piston (4) ou sur la sous-face du couvercle (6) et repose sur le joint élastomère (12) une fois l'espace collecteur de lubrifiant (5) complètement rempli.

2. Récipient collecteur selon la revendication 1, **caractérisé en ce que** le couvercle (6) présente une rainure d'étanchéité (14) étroite tournée vers l'ouverture d'admission (2) et qu'une saillie annulaire (9) est formée au dos du piston (4), qui se met en prise dans la rainure d'étanchéité (14) et est appuyée sur celle-ci une fois l'espace collecteur de lubrifiant (5) complètement rempli.

3. Récipient collecteur selon la revendication 2, **caractérisé en ce qu'**une bague d'étanchéité élastomère est disposée dans la rainure d'étanchéité (14).

4. Récipient collecteur selon l'une des revendications 1 à 3, **caractérisé en ce que** le piston (4) présente une réception d'outil (10) sur le côté tourné vers l'ouverture d'aération (7), sachant que pour vider le récipient collecteur, un outil peut être introduit par l'ouverture d'aération (7) et placé sur la réception d'outil (10).

5. Récipient collecteur selon l'une des revendications 1 à 4, **caractérisé en ce que** le piston (6) et le logement (1) sont reliés entre eux de façon séparable au moyen d'un filetage (11).

6. Récipient collecteur selon l'une des revendications 1 à 4, **caractérisé en ce que** le piston (6) et le logement (1) sont reliés entre eux de façon non séparable.
